# EUROPEAN PATENT SPECIFICATION

(11) **EP 4 187 904 B1**
(45) Date of publication and mention of the grant of the patent: **23.07.2025**
(21) Application number: 22209215.7
(22) Date of filing: 23.11.2022
(51) Int. Cl.: H04N 21/218, H04N 5/222, H04N 13/111, H04N 21/81, H04N 21/8547, H04N 23/90

(54) **INFORMATION PROCESSING APPARATUS, INFORMATION PROCESSING SYSTEM, AND PROGRAM**
INFORMATIONSVERARBEITUNGSGERÄT, INFORMATIONSVERARBEITUNGSSYSTEM UND PROGRAMM
APPAREIL DE TRAITEMENT DE L'INFORMATION, SYSTEME DE TRAITEMENT DE L'INFORMATION, ET PROGRAMME

(30) Priority: 29.11.2021 JP 2021193683
(43) Date of publication of application: 31.05.2023
(73) Proprietor: CANON KABUSHIKI KAISHA, Tokyo 146-8501 (JP)
(72) Inventor: ONUMA, Kazufumi, Tokyo 146-8501 (JP)
(74) Representative: Canon Europe Limited

(56) References cited:
- US-A1- 2018 182 114
- GRAU O ET AL: "A Combined Studio Production System for 3-D Capturing of Live Action and Immersive Actor Feedback", IEEE TRANSACTIONS ON CIRCUITS AND SYSTEMS FOR VIDEO TECHNOLOGY, IEEE, USA, vol. 14, no. 3, 1 March 2004 (2004-03-01), pages 370 - 380, XP011108802, ISSN: 1051-8215, DOI: 10.1109/TCSVT.2004.823397

## Description

### BACKGROUND OF THE INVENTION

### Field of the Invention

The present disclosure relates to a technique for generating a virtual viewpoint image.

### Description of the Related Art

In recent years, special attention has been paid to a technique in which a plurality of imaging apparatuses (cameras) are installed at different positions, images are captured thereby from different directions, and a virtual viewpoint image is generated using a plurality of captured images. The virtual viewpoint image generation technique enables a user to see an image viewed from a specified viewpoint (a virtual viewpoint). According to the technique for generating virtual viewpoint images as described above, for example, highlight scenes of a soccer game, a basketball game, or the like can be viewed from various angles, which gives a user a high sense of realism compared to normal images. Japanese Patent Laid-Open No. 2019-050593 discloses a technique for generating a virtual viewpoint image corresponding to a virtual viewpoint specified based on an operation by a user.

However, the technique disclosed in Japanese Patent Laid-Open No. 2019-050593 does not consider a case where a plurality of virtual viewpoints are specified by a plurality of operations. Furthermore, in a case where a plurality of virtual viewpoints are specified and a specific virtual viewpoint is selected from among them, it is necessary to generate a plurality of virtual viewpoint images and present them to the user, and thus an increase occurs in a processing load related to the generation of the virtual viewpoint images. There is also a demand for generating a selected virtual viewpoint image with appropriate quality.

US 2018/182114 A1 discusses a virtual viewpoint image generation apparatus including: a first generation unit configured to generate, based on a plurality of captured images obtained by a plurality of first cameras, a first virtual viewpoint image in accordance with a position and direction of a virtual viewpoint; a determination unit configured to determine, in accordance with evaluation results of the first virtual viewpoint image, whether or not to generate a second virtual viewpoint image whose image quality is higher than that of the first virtual viewpoint image based on one or a plurality of captured images obtained by one or a plurality of second cameras; and a second generation unit configured to generate the second virtual viewpoint image whose image quality is higher than that of the first virtual viewpoint image in accordance with determination by the determination unit.

A paper by Oliver Grau et al titled "A combined Studio Production System for 3-D Capturing of Live Action and Immersive Actor Feedback", IEEE Transactions on circuits and systems for video technology, IEEE, USA, vol. 14, no. 3, 1 March 2004, pp. 370-380, XP011108802, describes a system that allows the generation and rendering of 3-D models in preview quality for on-set visualization in real time and in high quality for post production applications in an offline phase. The shape reconstruction is based on the computation of the visual hull. The view-dependent projection component allows actors to be immersed into a virtual scene and to interact with virtual components.

The present disclosure provides a technique of appropriately generating a virtual viewpoint image corresponding to a selected virtual viewpoint while suppressing the processing load in selecting a specific virtual viewpoint from among a plurality of virtual viewpoints.

### SUMMARY OF THE INVENTION

The present invention in its first aspect provides an information processing apparatus as specified in claims 1 to 11.

The present invention in its second aspect provides an information processing method as specified in Claim 12.

The present invention in its third aspect provides a program as specified in claim 13.

Further features of the present invention will become apparent from the following description of embodiments with reference to the attached drawings.

### BRIEF DESCRIPTION OF THE DRAWINGS

Fig. 1 is a diagram illustrating a configuration of an information processing system.
Figs. 2A and 2B are flowcharts illustrating processes related to displaying a virtual viewpoint image.
Fig. 3 is a diagram illustrating an example of a manner in which images are displayed on a multiple-image display unit and an output image display unit.
Fig. 4 is a diagram illustrating a configuration of an information processing system according to a modification.
Fig. 5 is a diagram illustrating a hardware configuration of an information processing apparatus.
Fig. 6 is a diagram illustrating a functional configuration of an information processing apparatus.
Fig. 7 is a diagram illustrating an example of an arrangement of a plurality of imaging units.

### DESCRIPTION OF THE EMBODIMENTS

Embodiments of the present disclosure are described below with reference to drawings. Note that constituent elements described in the following embodiments are merely examples according to the present disclosure, and the scope of the present disclosure is not limited by these examples. Each of the embodiments of the present invention described below can be implemented solely or as a combination of a plurality of the embodiments or features thereof where necessary or where the combination of elements or features from individual embodiments in a single embodiment is beneficial.

### First Embodiment

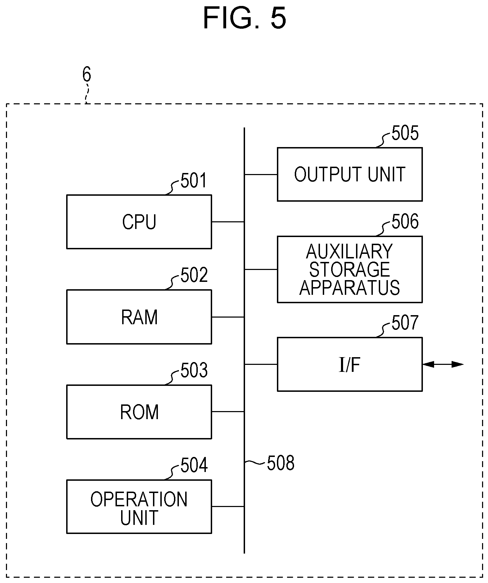

A hardware configuration of an information processing apparatus according to a first embodiment is described. Fig. 5 is a block diagram illustrating the hardware configuration of the information processing apparatus 6. The information processing apparatus 6 includes a CPU 501, a RAM 502, a ROM 503, an operation unit 504, an output unit 505, an auxiliary storage apparatus 506, an I/F 507, and a bus 508.

The CPU 501 controls an entire computer using computer programs and data stored in the RAM 502 or the ROM 503, and executes processes performed by the information processing apparatus 6 according to the present embodiment. That is, the CPU 501 functions as each processing unit of the information processing apparatus 6. Each processing unit will be described later.

The RAM 502 has an area for temporarily storing computer programs and data loaded from the auxiliary storage apparatus 506, data obtained from outside via the I/F 507, and the like. Furthermore, the RAM 502 has also a work area used by the CPU 501 in executing various processes. That is, the RAM 502 can be allocated, for example, as a frame memory and can provide other various areas as required.

The ROM 503 stores setting data of the computer, a boot program, and the like. The operation unit 504 includes a keyboard, a mouse, a joystick, a touch panel, etc., and is operated by a user of the computer to input various instructions to the CPU 501. The output unit 505 displays a result of processing performed by the CPU 501. The output unit 505 includes, for example, a liquid crystal display, a touch panel, or the like.

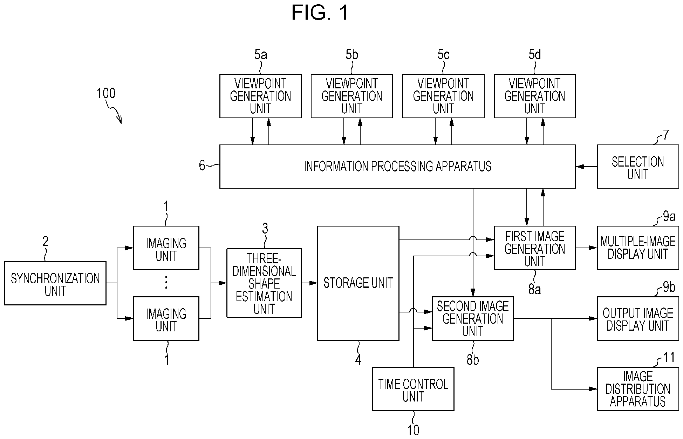

The auxiliary storage apparatus 506 is a large-capacity information storage apparatus typified by a hard disk drive. The auxiliary storage apparatus 506 stores an OS (operating system) and a computer program for causing the CPU 501 to realize the functions of the units shown in Fig. 1. The auxiliary storage apparatus 506 may further store one or more pieces of image data to be processed. Computer programs and data stored in the auxiliary storage apparatus 506 are loaded into the RAM 502, as required, under the control of the CPU 501 and processed by the CPU 501.

The I/F 507 is an interface for connecting with a network such as a LAN, the Internet or the like, other devices such as a projector, a display apparatus, or the like. The computer is allowed to send/receive various kinds of information via this I/F 507. For example, to connect the information processing apparatus 6 to an external apparatus via a communication cable, the communication cable is connected to the I/F 507. In a case where the information processing apparatus 6 has a function of wirelessly communicating with an external apparatus, the I/F 507 includes an antenna. In the present embodiment, a plurality of imaging apparatuses are connected to the I/F 507 to enable it to obtain captured images and control each imaging apparatus. The bus 508 is a bus via which the units described above are connected.

In the present embodiment, it is assumed by way of example that the operation unit 504, the output unit 505, and the auxiliary storage apparatus 506 exist inside the information processing apparatus 6, but the present disclosure is not limited to this configuration. The information processing apparatus 6 may be configured such that at least one of the operation unit 504, the output unit 505, and the auxiliary storage apparatus 506 is disposed as a separate apparatus outside the information processing apparatus 6 and is connected to the information processing apparatus 6. The hardware configuration of the information processing apparatus 6 has been described above. Note that this hardware configuration described above with reference to Fig. 5 may also be applied to other apparatuses included in an information processing system 100, which will be described later.

Next, an example of a configuration of the information processing system that generates a virtual viewpoint image according to the present embodiment is described below with reference to Fig. 1. The information processing system 100 according to the present embodiment includes a plurality of imaging units 1, a synchronization unit 2, a three-dimensional shape estimation unit 3, a storage unit 4, a viewpoint generation unit 5, an information processing apparatus 6, a selection unit 7, an image generation unit 8, a display unit 9, a time control unit 10, and a video distribution apparatus 11. Note that in the present embodiment, it is assumed by way of example that the generated virtual viewpoint image is a moving image, but this is merely an example, and the generated virtual viewpoint image is not limited to a moving image. That is, the present embodiment can be applied also to a virtual still viewpoint image. The processing units are described below unit by unit.

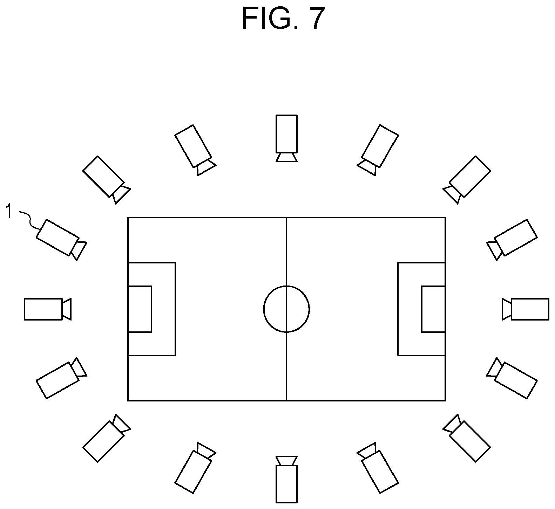

The imaging unit 1 is, for example, an imaging apparatus such as a camera. The synchronization unit 2 is an apparatus such as a time server, and outputs synchronization signals to the plurality of imaging units 1. The plurality of imaging units 1 perform imaging of imaging areas with high synchronization accuracy with each other based on synchronization signals transmitted from the synchronization unit 2. The plurality of imaging units 1 may be installed so as to surround an imaging area, for example, as shown in Fig. 7. Note that the arrangement and number of imaging units 1 are not limited to the examples shown in Fig. 7. The imaging area may be, for example, an outdoor area such as a sports stadiums, a field, a park, or the like, or an indoor area such as a gymnasium, a concert hall, a stage, a studio, or the like. Each imaging unit 1 outputs a captured image obtained as a result of imaging to the three-dimensional shape estimation unit 3.

The three-dimensional shape estimation unit 3 generates a three-dimensional model representing a three-dimensional shape of a subject based on a plurality of captured images acquired from the plurality of imaging units 1. An example of processing performed by the three-dimensional shape estimation unit 3 to generate a three-dimensional model is described below. The three-dimensional shape estimation unit 3 generates a foreground image and a background image using the acquired plurality of captured images.

Here, the foreground image is an image obtained by extracting an object area (a foreground area) from a captured image obtained by capturing by an imaging apparatus. The object extracted as the foreground area refers to a dynamic object (a moving object) that moves (its absolute position and shape can change) when the image thereof is captured in time series from the same direction. The object is, for example, a person such as a player or a referee in a field where a game is played, a ball in a ball game, or a singer, a performer, a moderator in a concert or entertainment, or the like. Furthermore, the object extracted as the foreground area may be, for example, an article used by a person.

The background image is an image of an area (a background area) different from at least the foreground object. More specifically, the background image is an image obtained by removing the foreground object from the captured image. The background image refers to an imaging target object that is stationary or continues to be nearly stationary when imaging is performed in time series from the same direction. More specifically, such an imaging target object is, for example, a stage of a concert, a stadium where an event such as a game is held, a structure such as a goal used in a ball game, a field, or the like. Note that the background area is an area different at least from the foreground object, and the area to be imaged as the background area may include, in addition to the object and the background, another object. The three-dimensional model data is data representing the above-described object in a three-dimensional shape.

An example of a method of generating a foreground image and a background image by the three-dimensional shape estimation unit 3 is described below. The three-dimensional shape estimation unit 3 compares a plurality of captured images obtained by capturing images at consecutive times by the plurality of imaging units 1, and detects an area in which pixel values do not change. The three-dimensional shape estimation unit 3 determines the detected area as a background area, and generates a background image based on the detected area. Furthermore, the three-dimensional shape estimation unit 3 compares the generated background image and the captured image, and determines that an area in which differences in the image value are equal to or greater than a predetermined threshold value is a foreground area and generates a foreground image based on the detected foreground area.

An example of a method used by the three-dimensional shape estimation unit 3 to generate a three-dimensional model of an object corresponding to a foreground area is described below. Based on the foreground area and background area detected in the above-described process, the three-dimensional shape estimation unit 3 generates a silhouette image of the object in which each area is represented in binary values. In this process, by using captured images captured from a plurality of directions, the three-dimensional shape estimation unit 3 generates silhouette images of the object viewed from a plurality of directions. The three-dimensional shape estimation unit 3 generate a three-dimensional model, for example, by using a known technique such as a shape-from-silhouette method based on the plurality of silhouette images.

In the above example, the three-dimensional shape estimation unit 3 generates the foreground image, the background image, and the silhouette image, but the present disclosure is not limited to this example. For example, the imaging unit 1 or another apparatus connected to the imaging unit 1 may have a function of generating at least one of the foreground image, the background image, and the silhouette image. In this case, the imaging unit 1 or the apparatus outputs the generated image to the three-dimensional shape estimation unit 3, and the three-dimensional shape estimation unit 3 generates the three-dimensional model using the acquired image. The three-dimensional shape estimation unit 3 outputs the generated three-dimensional model to the storage unit 4.

The storage unit 4 is an apparatus such as a database server that stores and accumulates a group of data for use in generating a virtual viewpoint image. The three-dimensional model input from the three-dimensional shape estimation unit 3 is one of specific examples of the data. Other specific examples of the data are camera parameters representing a position, an orientation, optical characteristics, and the like of each imaging unit 1. The storage unit 4 may store a background model, a background texture image, and/or the like in advance for use in drawing a background of a virtual viewpoint image. The storage unit 4 may acquire a captured image from the imaging unit 1 and store the acquired captured image.

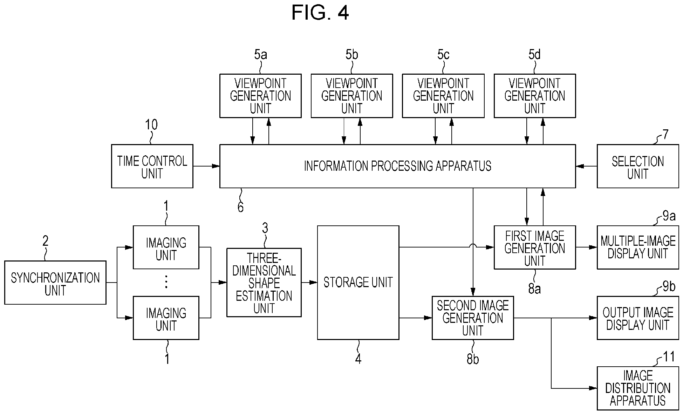

The viewpoint generation units 5a to 5d each include an operation unit functioning as an input apparatus such as a joystick, and a display unit for displaying a virtual viewpoint image corresponding to a viewpoint being operated. Each of the viewpoint generation units 5a to 5d generates viewpoint information representing the position of the virtual viewpoint and the line-of-sight direction from the virtual viewpoint based on the input from the operation unit, and inputs the resultant viewpoint information to the information processing apparatus 6. In addition to the information representing the position of the virtual viewpoint and the line-of-sight direction from the virtual viewpoint, the viewpoint information may include information corresponding to internal parameters of the camera, such as information regarding the focal length, the angle of view, and/or the like. In the example described above with reference to Fig. 4, it is assumed that there are four viewpoint generation units 5a to 5d, but the number thereof may be three or less or five or more.

In the following description, when there is no particular need to distinguish among the viewpoint generation units 5a to 5d, an expression "viewpoint generation unit 5" will be used.

The information processing apparatus 6 acquires viewpoint information from the viewpoint generation unit 5, and outputs it to a first image generation unit 8a and a second image generation unit 8b, which will be described later. Furthermore, the information processing apparatus 6 receives a viewpoint information selection instruction from the selection unit 7, which will be described later. The configuration of the information processing apparatus 6 will be described later.

The selection unit 7 is an input apparatus such as a mouse, a keyboard, a switch, or the like. The selection unit 7 transmits an instruction, to the information processing apparatus 6, to select one or more pieces of viewpoint information from among the viewpoint information output by the viewpoint generation units 5.

The first image generation unit 8a and the second image generation unit 8b each are an apparatus such as a rendering server which generates a virtual viewpoint image based on the viewpoint information acquired from the information processing apparatus 6. In the generation of the virtual viewpoint images, the first image generation unit 8a and the second image generation unit 8b acquire data necessary for generating the virtual viewpoint images from the storage unit 4 based on the time information included in the viewpoint information. Here, the time information is information regarding the time related to the virtual viewpoint image corresponding to the viewpoint information. More specifically, it can be a time code or the like representing the time of capturing the image by the imaging unit 1. In the present embodiment, time information is similarly added to the data such as the three-dimensional model and the foreground image stored in the storage unit 4. By specifying time information, the necessary data can be acquired from the storage unit 4. Note that the time information is not limited to the time information indicating the time of capturing an image by the imaging unit 1, and the time information may represent, for example, a relative time from a predetermined time, a frame number of a moving image, or the like.

The first image generation unit 8a and the second image generation unit 8b perform rendering processing using the three-dimensional model and the foreground image to generate a virtual viewpoint image of an object representing the appearance viewed from the virtual viewpoint. Furthermore, the first image generation unit 8a and the second image generation unit 8b generate a background image using the background model and the background texture, and combine the background image with the virtual viewpoint image of the object to obtain a virtual viewpoint image with a background.

According to a plurality of pieces of viewpoint information generated by operating a plurality of viewpoint generation units 5, the first image generation unit 8a generates a plurality of virtual viewpoint images based on predetermined quality conditions. Here, it is assumed that the conditions regarding the quality of the virtual viewpoint image in the present embodiment are conditions regarding the resolution of the generated image and the frame rate of the moving image. It is assumed that the higher the resolution and the higher the frame rate, the higher the quality of the virtual viewpoint image. The first image generation unit 8a outputs the generated virtual viewpoint image to the multiple-image display unit 9a. Note that, in the present embodiment, the first image generation unit 8a and the second image generation unit 8b are assumed to be different apparatuses.

The second image generation unit 8b acquires one or more pieces of viewpoint information selected by the selection unit 7 from among a plurality of pieces of viewpoint information, and generates a virtual viewpoint image. It is assumed that the virtual viewpoint image generated in the above process has higher quality than the virtual viewpoint image generated by the first image generation unit 8a.

The second image generation unit 8b outputs the generated virtual viewpoint image to the output image display unit 9b and the video distribution apparatus 11. That is, the first image generation unit 8a generates the plurality of virtual viewpoint images so as to satisfy conditions for generating virtual viewpoint images having at least one of the predetermined resolution and the predetermined frame rate, and the second image generation unit 8b generates the plurality of virtual viewpoint images so as to satisfy conditions for generating virtual viewpoint images having at least one of the resolution higher than the predetermined resolution and the frame rate higher than the predetermined frame rate.

The multiple-image display unit 9a and the output image display unit 9b respectively display virtual viewpoint images obtained from the first image generation unit 8a and the second image generation unit 8b. The time control unit 10 controls time information such that the time information used by the first image generation unit 8a in generating virtual viewpoint images is synchronized with the time information used by the second image generation unit 8b in generating virtual viewpoint images. The video distribution apparatus 11 distributes the virtual viewpoint image transmitted from the second image generation unit 8b via, for example, television broadcasting or the Internet.

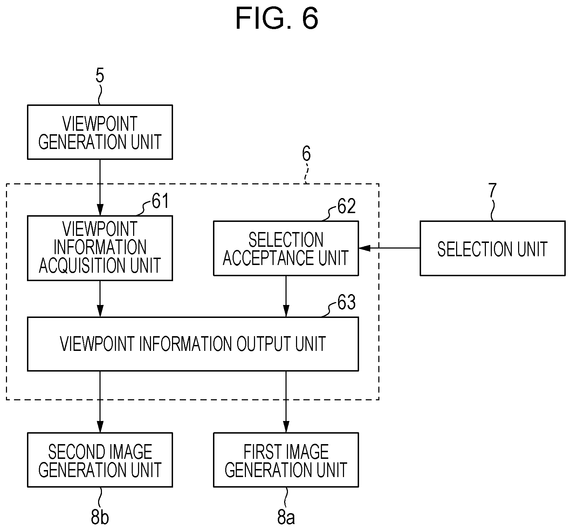

Next, a functional configuration of the information processing apparatus 6 is described below with reference to Fig. 6. The information processing apparatus 6 includes a viewpoint information acquisition unit 61, a selection acceptance unit 62, and a viewpoint information output unit 63. The viewpoint information acquisition unit 61 acquires viewpoint information transmitted from the viewpoint generation unit 5 and outputs the acquired viewpoint information to the viewpoint information output unit 63. In a case where a plurality of viewpoint generation units 5 are provided, the viewpoint information acquisition unit 61 acquires a plurality of pieces of viewpoint information and outputs them to the viewpoint information output unit 63. The selection acceptance unit 62 accepts a viewpoint information selection instruction from the selection unit 7 and outputs information indicating the accepted instruction to the viewpoint information output unit 63.

Based on the acquired viewpoint information and the selection instruction information, the viewpoint information output unit 63 outputs viewpoint information to the first image generation unit 8a and the second image generation unit 8b. In this process, the viewpoint information output unit 63 outputs a plurality of pieces of viewpoint information to the first image generation unit 8a, and outputs one or more pieces of viewpoint information selected from among the plurality of pieces of viewpoint information according to the selection instruction to the second image generation unit 8b. As described above, the viewpoint information output unit 63 outputs the viewpoint information to the first image generation unit 8a and the second image generation unit 8b, and performs control such that the virtual viewpoint images generated by processing units described above are displayed on the multiple-image display unit 9a and the output image display unit 9b.

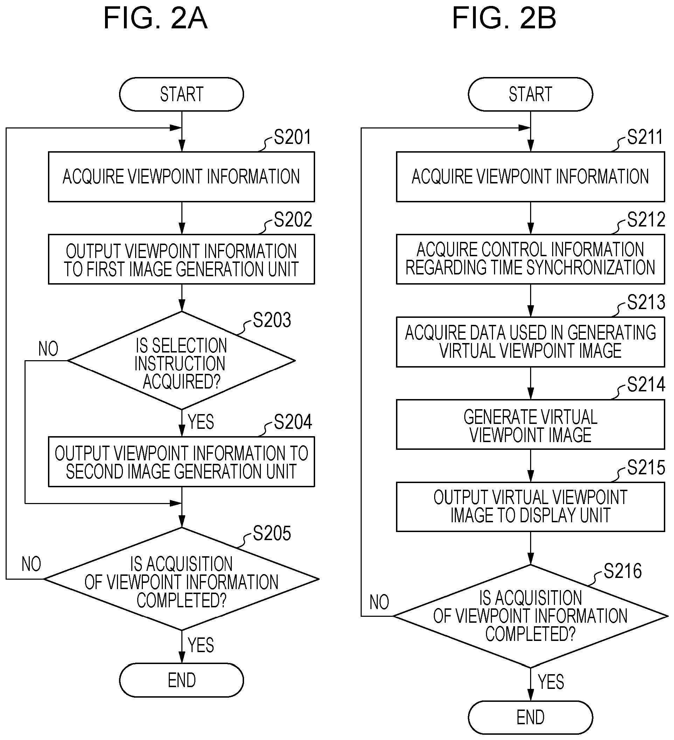

Next, processing performed by the information processing system 100 according to the present embodiment is described below with reference to Figs. 2A and 2B. Fig. 2A is a flowchart of processing performed by the information processing apparatus 6. The processing shown in Fig. 2A is performed by the CPU 501 of the information processing apparatus 6 by reading and executing programs stored in the RAM 502 and the ROM 503. In the following description, processing steps are simply denoted as S. The processing is started when viewpoint information is input from the viewpoint generation unit 5. The processing from S201 to S205 is executed repeatedly for each video frame of the generated virtual viewpoint image. That is, in a case where a moving image to be generated is at 60 FPS (frames per second), the processing from S201 to S205 is repeated every 1/60 of a second.

In S201, the viewpoint information acquisition unit 61 acquires a plurality of pieces of viewpoint information generated by operating the operation units of the plurality of viewpoint generation units 5. In S202, the viewpoint information output unit 63 outputs the acquired plurality of pieces of viewpoint information to the first image generation unit 8a.

In S203, the selection acceptance unit 62 determines whether an instruction to select viewpoint information is newly acquired from the selection unit 7. For example, when a selection instruction is accepted for the first time or when a selection instruction is accepted which instructs to select viewpoint information different from the viewpoint information previously selected in S204 in the iteration loop from S201 to S205, the processing flow proceeds to S204. On the other hand, in a case where no new selection instruction is acquired, or in a case where there is no difference from the viewpoint information from that selected in the S204 previously in the iteration loop from S201 to S205, the processing flow proceeds to S205.

In S204, the viewpoint information output unit 63 outputs, to the second image generation unit 8b, one or more pieces of viewpoint information selected by the selection acceptance unit according to the selection instruction acquired by the selection acceptance unit 62 from among the plurality of pieces of viewpoint information acquired by the viewpoint information acquisition unit 61. In S205, the viewpoint information acquisition unit 61 determines whether acquisition of viewpoint information is completed, for example, based on an end instruction given from the viewpoint generation unit 5.

In a case where it is determined that the acquisition is completed, the processing is ended, but in a case where the acquisition is not completed, the processing from S201 to S205 is repeated.

Next, processing performed by the first image generation unit 8a and processing performed by the second image generation unit 8b are described with reference to Fig. 2B. The processing shown in Fig. 2B is performed by the CPUs of the first image generation unit 8a and the second image generation unit 8b by reading and executing programs stored in the RAM and the ROM. It is assumed that the first image generation unit 8a and the second image generation unit 8b independently perform the processing shown in Fig. 2B. In the following description, when it is not necessary to distinguish among the first image generation unit 8a and the second image generation unit 8b, a simple expression "image generation unit 8" will be used. When the image generation unit 8 acquires viewpoint information, the processing is started.

In S211, the image generation unit 8 acquires viewpoint information from the information processing apparatus 6. In this processing, the first image generation unit 8a acquires a plurality of pieces of viewpoint information output in S202.

On the other hand, the second image generation unit 8b acquires the selected viewpoint information output in S204.

In S212, the image generation unit 8 acquires control information regarding time synchronization from the time control unit 10. An example of control performed by the time control unit 10 is described. The plurality of viewpoint generation units 5 are operated independently. For this reason, the timing of acquiring viewpoint information is not necessarily equal among the viewpoint information acquisition units 61, and there is a possibility that there is a difference in the time information included in the plurality of pieces of viewpoint information. In view of the above, the time control unit 10 outputs, to the image generation units 8, synchronization signals as control information for synchronizing the times represented by the time information included in the plurality of pieces of viewpoint information. The image generation units 8 synchronize the times of the plurality of pieces of viewpoint information based on the synchronization signals. This enables the image generation units 8 to acquire a plurality of pieces of viewpoint information at synchronized times. Note that the time control method performed by the time control unit 10 is not limited to that described above. For example, a signal specifying time information for acquiring data may be output to the image generation unit 8. This makes it possible for the image generation unit 8 to acquire data corresponding to the time specified by the signal acquired from the time control unit 10 from the storage unit 4.

In S213, based on the time information included in the viewpoint information, the image generation unit 8 acquires data used for generating a virtual viewpoint image from the storage unit 4. Examples of the acquired data are a three-dimensional model of an object, a foreground image, a background model, a background texture, or the like. In S212, since the time information included in the plurality of pieces of viewpoint information is synchronized, it is sufficient to acquire data corresponding to one piece of time information even in a case where a plurality of virtual viewpoint images corresponding to a plurality of pieces of viewpoint information are generated. This makes it possible to reduce the processing load on the image generation unit 8 in reading the data from the storage unit 4, and it is also possible to reduce the amount of data transmitted in the reading.

In S214, the image generation unit 8 generates a virtual viewpoint image based on the viewpoint information and the data acquired from the storage unit 4. An example of generating a virtual viewpoint image is described. Here, it is assumed that the image generation unit 4 has already obtained, from the storage unit 4, a three-dimensional model corresponding to certain time information and a foreground image for coloring the three-dimensional model. In a case where there are a plurality of pieces of viewpoint information related to virtual viewpoint images to be generated, the plurality of virtual viewpoint images are generated by coloring the three-dimensional model based on the position of the virtual viewpoint represented by each piece of viewpoint information and the line-of-sight direction from the virtual viewpoint.

In S214, the first image generation unit 8a generates a virtual viewpoint image with quality lower than the quality of the virtual viewpoint image generated by the second image generator 8b. For example, in a case where four pieces of viewpoint information are acquired, the first image generation unit 8a generates four virtual viewpoint images with a resolution of Half HD (960 × 540 pixels). When one of the four pieces of viewpoint information is selected, the second image generation unit 8b generates virtual viewpoint image with a resolution of a Full HD (1920 × 1080 pixels).

In another example, when four pieces of viewpoint information are acquired, the first image generation unit 8a generates four virtual viewpoint images in the form of moving images with a frame rate of 30 FPS. When one of the four pieces of viewpoint information is selected, the second image generation unit 8b generates one virtual viewpoint image in the form of moving images with a frame rate of 60 FPS.

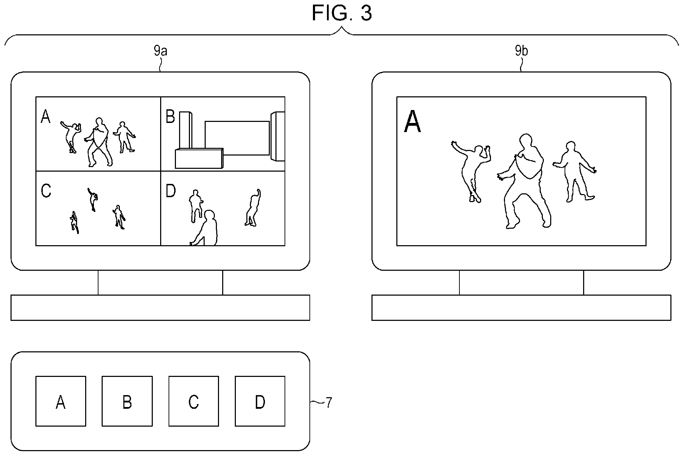

In S215, the first image generation unit 8a outputs the generated virtual viewpoint images to the multiple-image display unit 9a. The second image generation unit 8b outputs the generated virtual viewpoint image to the output image display unit 9b and the video distribution apparatus 11. Fig. 3 illustrates an example of a manner in which images are displayed on the multiple-image display unit 9a and the output image display unit 9b for a case where there are four pieces of viewpoint information. As shown in Fig. 3, the multiple-image display unit 9a simultaneously displays a plurality of virtual viewpoint images A to D corresponding to the plurality of pieces of viewpoint information. The output image display unit 9b displays the virtual viewpoint image A corresponding to the viewpoint information selected from among the four pieces of viewpoint information. Here, it is assumed that the virtual viewpoint image A displayed on the output image display unit 9b has higher quality than the quality of the plurality of virtual viewpoint images A to D displayed on the multiple-image display unit 9a.

A user selects a virtual viewpoint image to be supplied to the video distribution apparatus 11 by operating one of a plurality of switches (switcher) of the selection unit 7 shown in Fig. 3 while viewing a plurality of virtual viewpoint images displayed on the multiple-image display unit 9a. Since the selected virtual viewpoint image is displayed on the output image display unit 9b, the user can view, for the confirmation, the virtual viewpoint image with high quality to be distributed.

Although there are four pieces of viewpoint information in the above example, the number of pieces of viewpoint information is not limited to four. For example, in a case where there are 16 pieces of viewpoint information, the first image generation unit 8a generates 16 virtual viewpoint images with a further lowered resolution of 480 × 270 pixels. This makes it possible to reduce the processing load associated with rendering on the first image generation unit 8a and the processing load associated with displaying on the multiple-image display unit 9a. In the above example, one piece of viewpoint information is selected by the selection unit 7, but two or more pieces of viewpoint information may be selected.

In S216, the image generation unit 8 determines whether acquisition of viewpoint information is completed. In a case where it is determined that the acquisition is completed, the processing is ended, but if the acquisition is not completed, the processing from S211 to S216 is repeated.

In the present embodiment, as described above, the information processing apparatus 6 controls displaying by outputting the viewpoint information to the image generation unit 8 such that the virtual viewpoint images are displayed on the multiple-image display unit 9a and the output image display unit 9b. The user can easily confirm viewpoint information to be used for distribution from among a plurality of pieces of viewpoint information obtained via a plurality of operations while suppressing the processing load associated with displaying virtual viewpoint images.

Furthermore, the present disclosure makes it possible to adequately generate a virtual viewpoint image corresponding to the selected virtual viewpoint while suppressing the processing load when selecting a specific virtual viewpoint from among a plurality of virtual viewpoints.

### Modification of first embodiment

In the first embodiment described above, it is assumed by way of example that a plurality of virtual viewpoint images are displayed in the form of tiles on the multiple-image display unit 9a, which is one of display apparatuses. However, the present disclosure is not limited to this. For example, a plurality of virtual viewpoint images may be displayed separately on different display apparatuses.

Furthermore, in the first embodiment, the viewpoint generation unit 5 includes the operation unit and the display unit, and the viewpoint generation unit 5 is operated by a user. However, the present disclosure is not limited to this. For example, the viewpoint generation unit 5 may be an apparatus that automatically generates the position of the virtual viewpoint and the line-of-sight direction from the virtual viewpoint in accordance with the time. In this configuration, the operation unit used by a user to perform an inputting operation and a display unit for displaying a virtual viewpoint image are not necessary.

Furthermore, in the first embodiment, the first image generation unit 8a and the second image generation unit 8b are assumed to be different apparatuses, but the present disclosure is not limited to this configuration. For example, the first image generation unit 8a and the second image generation unit 8b may be the same apparatus. In this case, this apparatus is assumed to be capable of switching the quality of the virtual viewpoint image generated in response to the timing of generating the virtual viewpoint image, such as the timing at which the viewpoint information is selected by the selection unit 7. Note that, in this configuration, a plurality of virtual viewpoint images corresponding to a plurality of pieces of viewpoint information based on a plurality of operations cannot be generated when the apparatus is functioning as the second image generation unit 8b. Instead, virtual viewpoint images which have already been generated may be displayed on the multiple-image display unit 9a.

Furthermore, in the first embodiment, the viewpoint selection unit 6, the first image generation unit 8a, and the second image generation unit 8b are separate components, but the present disclosure is not limited to this configuration.

Furthermore, in the first embodiment, the time control unit 10 outputs control information to the first image generation unit 8a and the second image generation unit 8b, respectively, but the present disclosure is not limited to this. For example, as shown in Fig. 4, the time control unit 10 may output control information to the information processing apparatus 6. In this case, the information processing apparatus 6 outputs the time information to the image generation units 8 together with the viewpoint information. In this configuration, it is not necessary to change the connection destination of the time control unit 10 when a change occurs in the configuration such as the number of the image generation units 8. Furthermore, in this configuration, since the time information and viewpoint information are all collected once in the information processing apparatus 6, such information may be stored in an internal storage unit of the information processing apparatus 6 or an external storage unit. This makes it possible to store even viewpoint information that is not selected at the time of distributing an image.

In this case, it is possible to generate a virtual viewpoint image based on the store information, and edit and use it as a virtual viewpoint image viewed from another viewpoint. The time control unit 10 may be included in the information processing apparatus 6.

### Other Embodiments

The present disclosure may be realized by supplying a program for realizing one or more functions of the one or more embodiments described above to a system or an apparatus via a network or a storage medium, and reading and executing the program by one or more processors of a computer in the system or the apparatus. The present disclosure may also be realized by a circuit (for example, an ASIC circuit) for realizing one or more functions.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments.

The scope of the invention is defined by the appended claims.

## Claims

1. An information processing apparatus (6) comprising:
acquisition means (61) configured to acquire a plurality of pieces of viewpoint information, each of the plurality of pieces of viewpoint information representing a position of a virtual viewpoint and a line-of-sight direction from the virtual viewpoint used for generating a virtual viewpoint image based on a plurality of captured images obtained by imaging performed by a plurality of imaging apparatuses (1);
first output means (63) arranged to output the plurality of pieces of viewpoint information acquired from the acquisition means (61) to first generation means (8a) configured to generate a plurality of virtual viewpoint images based on a condition of first quality according to the plurality of pieces of viewpoint information, wherein the plurality of virtual viewpoint images corresponds to a same time and is displayed simultaneously on a display unit (9a); and
second output means (63) arranged to output a piece of viewpoint information selected by a user from among the plurality of pieces of viewpoint information to second generation means (8b) configured to generate a virtual viewpoint image based on a condition of second quality higher than the first quality according to the pieces of viewpoint information, wherein the selected piece of viewpoint information is a piece of viewpoint information corresponding to a virtual viewpoint image selected by the user from among the plurality of virtual viewpoint images displayed on the display unit.

2. The information processing apparatus (6) according to Claim 1, wherein the first generation means (8a) and the second generation means (8b) are different apparatuses.

3. The information processing apparatus (6) according to Claim 1, wherein the first generation means (8a) and the second generation means (8b) are a same apparatus.

4. The information processing apparatus (6) according to Claim 3, wherein the same apparatus is an apparatus configured to switch, according to a timing of generating the virtual viewpoint image, between generating a virtual viewpoint image based on the condition of the first quality and generating a virtual viewpoint image based on the condition of the second quality.

5. The information processing apparatus (6) according to any one of Claims 1 to 4, wherein
the viewpoint information includes time information representing a time related to a virtual viewpoint image, and
the acquisition means (61) acquires a plurality of pieces of viewpoint information each including time information representing a synchronized time.

6. The information processing apparatus (6) according to Claim 5, further comprising control means (501) arranged to perform control so as to achieve synchronization of the time represented by time information included in each of the plurality of pieces of viewpoint information acquired by the acquisition means (61).

7. The information processing apparatus (6) according to any one of Claims 1 to 6, wherein the condition of the first quality and the condition of the second quality each include a condition regarding a resolution of a generated virtual viewpoint image.

8. The information processing apparatus (6) according to Claim 7, wherein
the condition of the first quality includes a condition for generating a virtual viewpoint image with a predetermined resolution, and
the condition of the second quality includes a condition for generating a virtual viewpoint image with a resolution higher than the predetermined resolution.

9. The information processing apparatus (6) according to any one of Claims 1 to 8, wherein the condition of the first quality and the condition of the second quality each include a condition of a frame rate of a generated virtual viewpoint image.

10. The information processing apparatus (6) according to Claim 9, wherein
the condition of the first quality includes a condition for generating a virtual viewpoint image with a predetermined frame rate, and
the condition of the second quality includes a condition for generating a virtual viewpoint image with a frame rate higher than the predetermined frame rate.

11. The information processing apparatus (6) according to any one of Claims 1 to 10, wherein virtual viewpoint images generated by the second generation means (8b) are virtual viewpoint images to be distributed.

12. An information processing method comprising:
acquiring (S201) a plurality of pieces of viewpoint information, each of the plurality of pieces of viewpoint information representing a position of a virtual viewpoint and a line-of-sight direction from the virtual viewpoint used for generating a virtual viewpoint image based on a plurality of captured images obtained by imaging performed by a plurality of imaging apparatuses (1);
performing (S202) a first output process to output the plurality of pieces of acquired viewpoint information acquired to first generation means (8a) configured to generate a plurality of virtual viewpoint images based on a condition of first quality according to the plurality of pieces of viewpoint information, wherein the plurality of pieces of virtual viewpoint images corresponds to a same time and is displayed simultaneously on a display unit (9a); and
performing (S204) a second output process to output a piece of viewpoint information selected by a user from among the plurality of pieces of viewpoint information to second generation means (8b) configured to generate a virtual viewpoint image based on a condition of second quality higher than the first quality according to the pieces of viewpoint information, wherein the selected piece of viewpoint information is a piece of viewpoint information corresponding to a virtual viewpoint image selected by the user from among the plurality of virtual viewpoint images displayed on the display unit.

13. A program that when executed on a computer causes the computer to function as the information processing apparatus (6) defined in any one of Claims 1 to 11.

## Patentansprüche

1. Informationsverarbeitungsvorrichtung (6), umfassend:
eine Erfassungseinrichtung (61), die konfiguriert ist, mehrere Blickpunktinformationen zu erfassen, wobei eine jeweilige der mehreren Blickpunktinformationen eine Position eines virtuellen Blickpunkts und eine Sichtlinienrichtung vom virtuellen Blickpunkt aus darstellt, die zum Erzeugen eines Bilds vom virtuellen Blickpunkt aus basierend auf mehreren aufgenommenen Bildern verwendet werden, die durch von mehreren Bildaufnahmevorrichtungen (1) durchgeführte Bildaufnahme erhalten werden;
eine erste Ausgabeeinrichtung (63), die eingerichtet ist, um die mehreren Blickpunktinformationen, welche von der Erfassungseinrichtung (61) erfasst werden, an eine erste Erzeugungseinrichtung (8a) auszugeben, die konfiguriert ist, mehrere Bilder von virtuellen Blickpunkten aus basierend auf einer Bedingung einer ersten Qualität gemäß den mehreren Blickpunktinformationen zu erzeugen, wobei die mehreren Bilder von virtuellen Blickpunkten aus einer gleichen Zeit entsprechen und gleichzeitig auf einer Anzeigeeinheit (9a) angezeigt werden; und
eine zweite Ausgabeeinrichtung (63), die eingerichtet ist, um eine Blickpunktinformation, die von einem Benutzer aus den mehreren Blickpunktinformationen ausgewählt wird, an eine zweite Erzeugungseinrichtung (8b) auszugeben, die konfiguriert ist, ein Bild vom virtuellen Blickpunkt aus basierend auf einer Bedingung einer zweiten Qualität, die höher als die erste Qualität ist, gemäß den Blickpunktinformationen zu erzeugen, wobei die ausgewählte Blickpunktinformation eine Blickpunktinformation ist, die einem Bild vom virtuellen Blickpunkt aus entspricht, das vom Benutzer aus den mehreren Bildern von virtuellen Blickpunkten aus ausgewählt wird, die auf der Anzeigeeinheit angezeigt werden.

2. Informationsverarbeitungsvorrichtung (6) nach Anspruch 1, wobei die erste Erzeugungseinrichtung (8a) und die zweite Erzeugungseinrichtung (8b) unterschiedliche Vorrichtungen sind.

3. Informationsverarbeitungsvorrichtung (6) nach Anspruch 1, wobei die erste Erzeugungseinrichtung (8a) und die zweite Erzeugungseinrichtung (8b) dieselbe Vorrichtung sind.

4. Informationsverarbeitungsvorrichtung (6) nach Anspruch 3, wobei dieselbe Vorrichtung eine Vorrichtung ist, die konfiguriert ist, gemäß einem Zeitpunkt des Erzeugens des Bilds vom virtuellen Blickpunkt aus zwischen dem Erzeugen eines Bilds vom virtuellen Blickpunkt aus basierend auf der Bedingung der ersten Qualität und dem Erzeugen eines Bilds vom virtuellen Blickpunkt aus basierend auf der Bedingung der zweiten Qualität zu wechseln.

5. Informationsverarbeitungsvorrichtung (6) nach einem der Ansprüche 1 bis 4, wobei
die Blickpunktinformation Zeitinformation enthält, die eine Zeit in Bezug auf ein Bild vom virtuellen Blickpunkt aus darstellt, und
die Erfassungseinrichtung (61) mehrere Blickpunktinformationen erfasst, die jeweils Zeitinformation enthalten, die eine synchronisierte Zeit darstellt.

6. Informationsverarbeitungsvorrichtung (6) nach Anspruch 5, ferner umfassend eine Steuereinrichtung (501), die eingerichtet ist, um eine Steuerung durchzuführen, um eine Synchronisierung der Zeit zu erreichen, die durch Zeitinformation dargestellt wird, die in einer jeweiligen der mehreren Blickpunktinformationen enthalten ist, die von der Erfassungseinrichtung (61) erfasst werden.

7. Informationsverarbeitungsvorrichtung (6) nach einem der Ansprüche 1 bis 6, wobei die Bedingung der ersten Qualität und die Bedingung der zweiten Qualität jeweils eine Bedingung bezüglich einer Auflösung eines erzeugten Bilds vom virtuellen Blickpunkt aus enthalten.

8. Informationsverarbeitungsvorrichtung (6) nach Anspruch 7, wobei
die Bedingung der ersten Qualität eine Bedingung zum Erzeugen eines Bilds von virtuellem Blickpunkt aus mit einer vorbestimmten Auflösung enthält, und
die Bedingung der zweiten Qualität eine Bedingung zum Erzeugen eines Bilds vom virtuellen Blickpunkt aus mit einer Auflösung enthält, die höher als die vorbestimmte Auflösung ist.

9. Informationsverarbeitungsvorrichtung (6) nach einem der Ansprüche 1 bis 8, wobei die Bedingung der ersten Qualität und die Bedingung der zweiten Qualität jeweils eine Bedingung einer Bildrate eines erzeugten Bilds vom virtuellen Blickpunkt aus enthalten.

10. Informationsverarbeitungsvorrichtung (6) nach Anspruch 9, wobei
die Bedingung der ersten Qualität eine Bedingung zum Erzeugen eines Bilds vom virtuellen Blickpunkt aus mit einer vorbestimmten Bildrate enthält, und
die Bedingung der zweiten Qualität eine Bedingung zum Erzeugen eines Bilds vom virtuellen Blickpunkt aus mit einer Bildrate enthält, die höher als die vorbestimmte Bildrate ist.

11. Informationsverarbeitungsvorrichtung (6) nach einem der Ansprüche 1 bis 10, wobei durch die zweite Erzeugungseinrichtung (8b) erzeugte Bilder von virtuellen Blickpunkten aus zu verteilende Bilder von virtuellen Blickpunkten aus sind.

12. Informationsverarbeitungsverfahren, umfassend:
Erfassen (S201) mehrerer Blickpunktinformationen, wobei eine jeweilige der mehreren Blickpunktinformationen eine Position eines virtuellen Blickpunkts und eine Sichtlinienrichtung vom virtuellen Blickpunkt aus darstellt, die zum Erzeugen eines Bilds vom virtuellen Blickpunkt aus basierend auf mehreren aufgenommenen Bildern verwendet werden, die durch von mehreren Bildaufnahmevorrichtungen (1) durchgeführte Bildaufnahme erhalten werden;
Durchführen (S202) eines ersten Ausgabeprozesses, um die mehreren erfassten Blickpunktinformationen an eine erste Erzeugungseinrichtung (8a) auszugeben, die konfiguriert ist, mehrere Bilder von virtuellen Blickpunkten aus basierend auf einer Bedingung einer ersten Qualität gemäß den mehreren Blickpunktinformationen zu erzeugen, wobei die mehreren Bilder von virtuellen Blickpunkten aus derselben Zeit entsprechen und gleichzeitig auf einer Anzeigeeinheit (9a) angezeigt werden; und
Durchführen (S204) eines zweiten Ausgabeprozesses, um eine Blickpunktinformation, die von einem Benutzer aus den mehreren Blickpunktinformationen ausgewählt wird, an eine zweite Erzeugungseinrichtung (8b) auszugeben, die konfiguriert ist, ein Bild vom virtuellen Blickpunkt aus basierend auf einer Bedingung einer zweiten Qualität, die höher als die erste Qualität ist, gemäß den Blickpunktinformationen zu erzeugen, wobei die ausgewählte Blickpunktinformation eine Blickpunktinformation ist, die einem Bild vom virtuellen Blickpunkt aus entspricht, das vom Benutzer aus den mehreren Bildern vom virtuellen Blickpunkt aus ausgewählt wird, die auf der Anzeigeeinheit angezeigt werden.

13. Programm, das bei Ausführung auf einem Computer diesen veranlasst, als die in einem der Ansprüche 1 bis 11 definierte Informationsverarbeitungsvorrichtung (6) zu fungieren.

## Revendications

1. Appareil de traitement d'informations (6) comprenant :
des moyens d'acquisition (61) configurés pour acquérir une pluralité d'éléments d'informations de point de vue, chacun de la pluralité d'éléments d'informations de point de vue représentant une position d'un point de vue virtuel et une direction de ligne de visée à partir du point de vue virtuel utilisées pour générer une image de point de vue virtuel sur la base d'une pluralité d'images capturées obtenues par imagerie réalisée par une pluralité d'appareils d'imagerie (1) ;
des premiers moyens de sortie (63) agencés pour délivrer en sortie la pluralité d'éléments d'informations de point de vue acquise par les moyens d'acquisition (61) vers des premiers moyens de génération (8a) configurés pour générer une pluralité d'images de point de vue virtuel basées sur une condition de première qualité selon la pluralité d'éléments d'informations de point de vue, dans lequel la pluralité d'images de point de vue virtuel correspond à un même temps et est affichée simultanément sur une unité d'affichage (9a) ; et
des seconds moyens de sortie (63) agencés pour délivrer en sortie un d'élément d'informations de point de vue sélectionné par un utilisateur parmi la pluralité d'éléments d'informations de point de vue vers des seconds moyens de génération (8b) configurés pour générer une image de point de vue virtuel basée sur une condition de seconde qualité supérieure à la première qualité selon les éléments d'informations de point de vue, dans lequel l'élément d'informations de point de vue sélectionné est un élément d'informations de point de vue correspondant à une image de point de vue virtuel sélectionnée par l'utilisateur parmi la pluralité d'images de point de vue virtuel affichées sur l'unité d'affichage.

2. Appareil de traitement d'informations (6) selon la revendication 1, dans lequel les premiers moyens de génération (8a) et les seconds moyens de génération (8b) sont des appareils différents.

3. Appareil de traitement d'informations (6) selon la revendication 1, dans lequel les premiers moyens de génération (8a) et les seconds moyens de génération (8b) sont un même appareil.

4. Appareil de traitement d'informations (6) selon la revendication 3, dans lequel le même appareil est un appareil configuré pour basculer, selon un cadencement de génération de l'image de point de vue virtuel, entre la génération d'une image de point de vue virtuel basée sur la condition de la première qualité et la génération d'une image de point de vue virtuel basée sur la condition de la seconde qualité.

5. Appareil de traitement d'informations (6) selon l'une quelconque des revendications 1 à 4, dans lequel
les informations de point de vue comportent des informations temporelles représentant un temps lié à une image de point de vue virtuel, et
les moyens d'acquisition (61) acquièrent une pluralité d'éléments d'informations de point de vue comportant chacun des informations temporelles représentant un temps synchronisé.

6. Appareil de traitement d'informations (6) selon la revendication 5, comprenant en outre des moyens de commande (501) agencés pour effectuer une commande de manière à obtenir une synchronisation du temps représenté par des informations temporelles comprises dans chacun de la pluralité d'éléments d'informations de point de vue acquis par les moyens d'acquisition (61).

7. Appareil de traitement d'informations (6) selon l'une quelconque des revendications 1 à 6, dans lequel la condition de la première qualité et la condition de la seconde qualité comportent chacune une condition concernant une résolution d'une image de point de vue virtuel générée.

8. Appareil de traitement d'informations (6) selon la revendication 7, dans lequel la condition de la première qualité comporte une condition de génération d'une image de point de vue virtuel avec une résolution prédéterminée, et
la condition de la seconde qualité comporte une condition de génération d'une image de point de vue virtuel avec une résolution supérieure à la résolution prédéterminée.

9. Appareil de traitement d'informations (6) selon l'une quelconque des revendications 1 à 8, dans lequel la condition de la première qualité et la condition de la seconde qualité comportent chacune une condition d'une fréquence de trame d'une image de point de vue virtuel générée.

10. Appareil de traitement d'informations (6) selon la revendication 9, dans lequel la condition de la première qualité comporte une condition de génération d'une image de point de vue virtuel avec une fréquence de trame prédéterminée, et
la condition de la seconde qualité comporte une condition de génération d'une image de point de vue virtuel avec une fréquence de trame supérieure à la fréquence de trame prédéterminée.

11. Appareil de traitement d'informations (6) selon l'une quelconque des revendications 1 à 10, dans lequel des images de point de vue virtuel générées par les seconds moyens de génération (8b) sont des images de point de vue virtuel à distribuer.

12. Procédé de traitement d'informations comprenant :
l'acquisition (S201) d'une pluralité d'éléments d'informations de point de vue, chacun de la pluralité d'éléments d'informations de point de vue représentant une position d'un point de vue virtuel et une direction de ligne de visée à partir du point de vue virtuel utilisées pour générer une image de point de vue virtuel sur la base d'une pluralité d'images capturées obtenues par imagerie réalisée par une pluralité d'appareils d'imagerie (1) ;
la réalisation (S202) d'un premier processus de sortie pour délivrer en sortie la pluralité d'éléments d'informations de point de vue acquise vers des premiers moyens de génération (8a) configurés pour générer une pluralité d'images de point de vue virtuel basées sur une condition de première qualité selon la pluralité d'éléments d'informations de point de vue, dans lequel la pluralité d'éléments d'images de point de vue virtuel correspond à un même temps et est affichée simultanément sur une unité d'affichage (9a) ; et
la réalisation (S204) d'un second processus de sortie pour délivrer en sortie un d'élément d'informations de point de vue sélectionné par un utilisateur parmi la pluralité d'éléments d'informations de point de vue vers des seconds moyens de génération (8b) configurés pour générer une image de point de vue virtuel basée sur une condition de seconde qualité supérieure à la première qualité selon les éléments d'informations de point de vue, dans lequel l'élément d'informations de point de vue sélectionné est un élément d'informations de point de vue correspondant à une image de point de vue virtuel sélectionnée par l'utilisateur parmi la pluralité d'images de point de vue virtuel affichées sur l'unité d'affichage.

13. Programme qui, lorsqu'il est exécuté sur un ordinateur, amène l'ordinateur à fonctionner comme l'appareil de traitement d'informations (6) défini selon l'une quelconque des revendications 1 à 11.
